# EUROPÄISCHE PATENTSCHRIFT

(11) **EP 2 211 456 B1**
(45) Veröffentlichungstag und Bekanntmachung des Hinweises auf die Patenterteilung: **17.08.2011**
(21) Anmeldenummer: 09000832.7
(22) Anmeldetag: 22.01.2009
(51) Int. Cl.: H02P 7/29

(54) **Verfahren zum Ansteuern einer elektrischen Last, elektronische Ansteuervorrichtung zum Ausführen des Verfahrens sowie elektrische Leuchte oder Elektrohandwerkzeuggerät mit einer solchen elektronischen Ansteuervorrichtung**
Method for controlling an electric load, electronic control device for carrying out the method and electric lamp or electric hand tool with such an electronic control device
Procédé de commande d'une charge électrique, dispositif de commande électronique destiné à l'exécution du procédé et lampe électrique ou outil électrique manuel doté d'un tel dispositif de commande électronique

(43) Veröffentlichungstag der Anmeldung: 28.07.2010
(73) Patentinhaber: Metabowerke GmbH, 72622 Nürtingen (DE)
(72) Erfinder: Gräber, Jochen, 73266 Bissingen (DE)
(74) Vertreter: Raunecker, Klaus Peter

(56) Entgegenhaltungen:
- EP-B1- 0 658 266
- FR-A1- 2 726 134
- US-A- 5 001 619
- US-A- 6 144 176
- US-A1- 2006 214 609
- US-A1- 2008 094 194

## Beschreibung

Die Erfindung betrifft ein Verfahren zum Ansteuern eines insbesondere akkubetriebenen Elektrohandwerkzeuggeräts mittels Pulsweitenmodulation mit einer Frequenz der Pulsweitenmodulation (F_{PWM}) von 500 - 5000 Hz.

Des Weiteren betrifft die Erfindung eine elektronische Ansteuervorrichtung, die zur Ausführung des vorgenannten Verfahrens ausgebildet ist, und ein insbesondere akkubetriebenes Elektrohandwerkzeuggerät, das mittels Pulsweitenmodulation ansteuerbar ist.

Beim Ansteuern von elektrischen Lasten mittels Pulsweitenmodulation (PWM-Modulation) ist mitunter infolge der Ein- und Ausschaltvorgänge ein Geräusch, etwa in Form eines Brummens oder Piepsens (je nach Frequenz der PWM-Modulation) wahrnehmbar.

Es wurde bereits versucht, die Geräuschentwicklung durch eine analoge Ansteuerung der elektrischen Last zu umgehen. Dies ist jedoch mit sehr hohen elektrischen Verlusten verbunden. Eine andere Möglichkeit ist die Durchführung der Pulsweitenmodulation im Ultraschallfrequenzbereich; doch auch dies geht mit hohen Verlusten einher, außerdem ergeben sich Probleme im Hinblick auf die Auflösung der Pulsweitenmodulation. Wird eine Anstiegsbegrenzung durchgeführt, so ist auch dies mit sehr hohen Verlusten verbunden. Eine elektrische Glättung mittels elektrischer Energiespeicher, wie Spule und Kondensator, erfordert weitere Bauteile und eine zunehmende Baugröße.

Der vorliegenden Erfindung liegt die Aufgabe zugrunde, der Geräuschentwicklung in anderer Weise wirksam entgegenzuwirken.

Diese Aufgabe wird erfindungsgemäß durch ein Verfahren gelöst, das dadurch gekennzeichnet ist, dass der Einschaltvorgang und der Ausschaltvorgang bei vorzugsweise jedem einzelnen Puls seinerseits getaktet mit einer gegenüber der Frequenz der Pulsweitenmodulation (F_{PWM}) sehr viel höheren Frequenz (F_{ein/aus}) von 5 kHz - 50 kHz, insbesondere am oberen Ende oder außerhalb des vom menschlichen Gehör wahrnehmbaren Spektrums, durchgeführt wird, und dass der getaktet durchgeführte Einschaltvorgang wenigstens 5 Pulse umfasst, deren Länge (T) von Puls zu Puls zunimmt, und dass der getaktet durchgeführte Ausschaltvorgang wenigstens 5 Pulse umfasst, deren Länge (T) von Puls zu Puls abnimmt.

Erfindungsgemäß wird die Last also mit einer gegenüber üblichen Frequenzen geringeren Frequenz der Pulsweitenmodulation angesteuert. Jedoch wird ein jeweiliger Pulswechsel nicht sofort und dauerhaft erzwungen, sondern der Einschaltvorgang bzw. der Ausschaltvorgang wird seinerseits mit einer Taktung höherer Frequenz, also mit einer Mehrzahl von wenigstens 5, vorzugsweise von wenigstens 6 und weiter vorzugsweise von wenigstens 7 Pulsen, durchgeführt, wobei die Frequenz dieser den Einschaltvorgang bzw. den Ausschaltvorgang bildenden Pulse außerhalb des hörbaren Spektrums liegt. Es wurde erfindungsgemäß festgestellt, dass durch diese doppelte Modulation eine Verschiebung der Umschaltgeräusche in einen höheren, bevorzugterweise nicht hörbaren Bereich erreicht werden kann, ohne dass jedoch Nachteile einer dauerhaft hochfrequenten Pulsweitenmodulation in Kauf genommen werden müssten. Auch bei einer Frequenz am oberen Ende des hörbaren Bereichs kann eine Verbesserung der Geräuschwahrnehmung erreicht werden, da der Ton hierdurch leiser wird.

Des Weiteren erweist es sich als besonders vorteilhaft, dass der getaktet durchgeführte Einschaltvorgang mit zunehmender Pulslänge des Ein-Signals der jeweiligen Pulse durchgeführt wird. Die Frequenz bleibt dabei aber unverändert. Die PWM-Modulation beim Einschaltvorgang erfolgt also zudem noch mit ansteigender Leistung. Somit wird der Einschaltvorgang allmählich vollzogen. In entsprechender Weise wird der getaktet durchgeführte Ausschaltvorgang mit abnehmender Pulslänge des Ein-Signals der jeweiligen Pulse durchgeführt.

Nach einer bevorzugten Ausführungsform beträgt die Frequenz der Pulsweitenmodulation (F_{PWM}) 1000 - 3000 Hz, insbesondere 1500 - 2500 Hz und weiter insbesondere etwa 2000 Hz.

Nach einer bevorzugten Ausführungsform beträgt die Frequenz der Taktung während des Einschaltvorgangs und Ausschaltvorgangs (F_{ein/aus}) 10 kHz - 40 kHz und insbesondere 10 kHz - 30 kHz, und weiter insbesondere etwa 20 kHz.

Insgesamt kann durch das erfindungsgemäße Verfahren die beim Ansteuern einer elektrischen Last mittels Pulsweitenmodulation Geräuschentwicklung erheblich reduziert werden. Die elektrischen Verluste sind im Gegensatz zu hochfrequent durchgeführten Pulsweitenmodulationen sehr viel geringer. Gegenüber einer Lösung, bei der eine "elektrische Glättung" mittels elektrischer Energiespeicher (Spule, Kondensator) durchgeführt wird, werden weniger elektrische Bauteile benötigt, und die Baugröße wird reduziert.

Gegenstand der Erfindung ist des Weiteren eine zur Ausführung des erfindungsgemäßen Verfahrens ausgebildete elektronische Ansteuervorrichtung gemäß Anspruch 5 sowie ein Elektrohandwerkzeuggerät mit einer solchen elektronischen Ansteuervorrichtung gemäß Anspruch 6.

Weitere Merkmale, Einzelheiten und Vorteile der Erfindung ergeben sich aus den beigefügten Patentansprüchen und der zeichnerischen Darstellung und nachfolgenden Beschreibung des erfindungsgemäßen Verfahrens. In der Zeichnung 1 zeigt:
- Figur 1: eine schematische Darstellung eines pulsweitenmoduliert angesteuerten motorischen Antriebs eines Elektrowerkzeuggeräts;
- Figur 2a: eine Darstellung der Pulsweitenmodulation mit vergrößerter Darstellung des Einschalt- und Ausschaltvorgangs;
- Figur 2b: den Verlauf der durchschnittlichen an die Last angelegten Spannung mit ersichtlichen Schaltverlusten und
- Figur 2c: zeigt, an welchen Stellen der PWM Schaltverluste entstehen, am Beispiel des getakteten Ausschaltens eines Pulses.

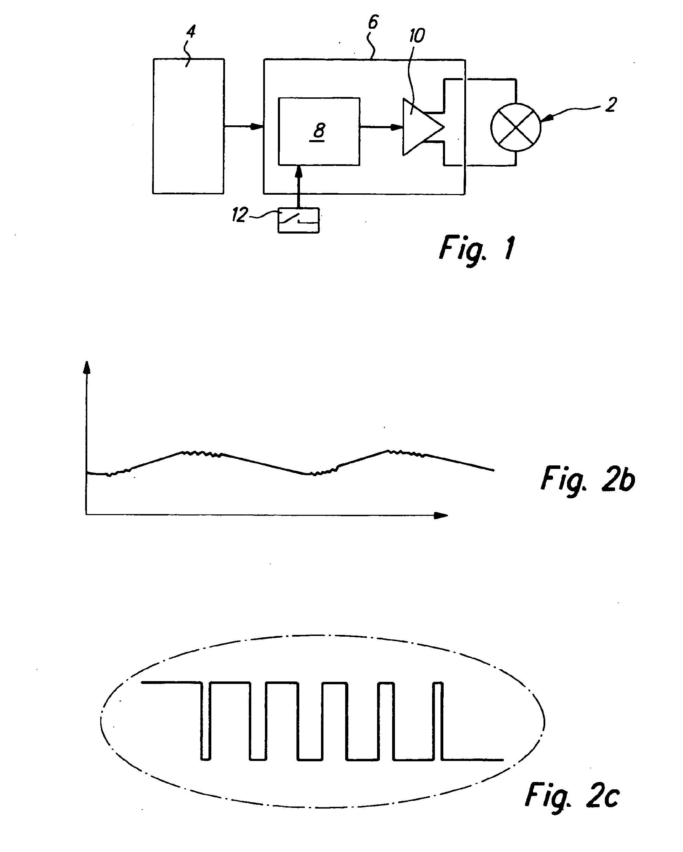

Figur 1 zeigt schematisch die Komponenten eines mittels Pulsweitenmodulation ansteuerbaren motorischen Antriebs eines Elektrowerkzeuggeräts, insbesondere akkubetriebenen Elektrohandwerkzeuggeräts. Mit Bezugszeichen 4 ist eine Energiequelle, insbesondere ein Akku, und mit Bezugszeichen 6 eine elektronische Ansteuervorrichtung zur Durchführung der Pulsweitenmodulation dargestellt. Die elektronische Ansteuervorrichtung 6 umfasst einen PWM-Controller 8 und einen Leistungsschalter 10 sowie ebenfalls schematisch dargestellt einen Bedienschalter 12 zum Einschalten bzw. Ausschalten des Elektrowerkzeuggeräts.

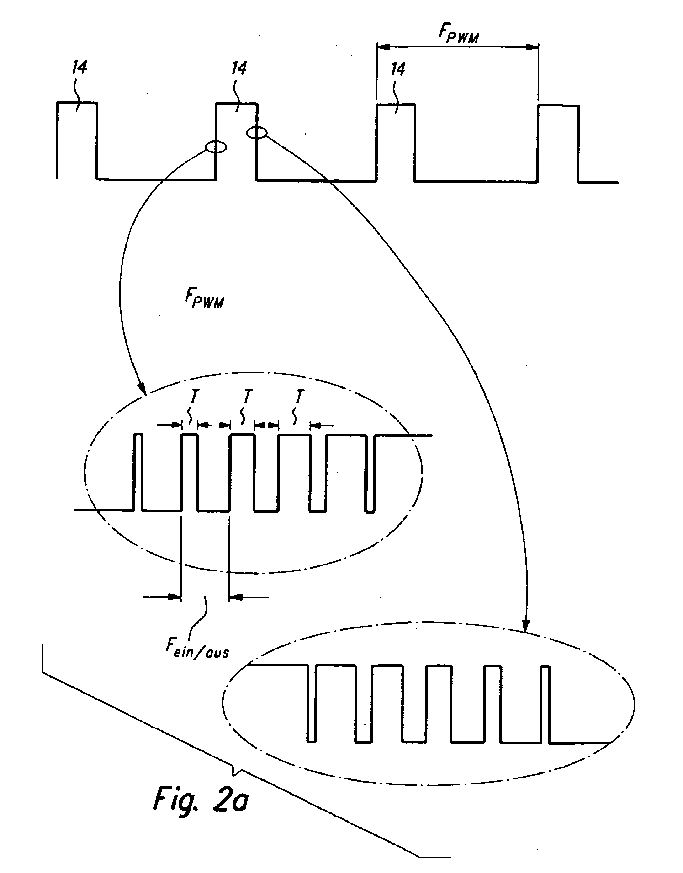

Erfindungsgemäß ist der PWM-Controller 8 softwaremäßig so programmiert, dass der Einschaltvorgang und der Ausschaltvorgang bei vorzugsweise jedem einzelnen Puls der Pulsweitenmodulation seinerseits getaktet durchgeführt wird. In Figur 2a sind (nicht maßstabsgetreu) Pulse 14 dargestellt, deren Pulsfrequenz beispielsweise ca. 2000 Hz betragen kann. Die Einschaltflanke bzw. Ausschaltflanke jedes Pulses wird jedoch nicht nur einmal durchlaufen, sondern der Einschaltvorgang und der Ausschaltvorgang erfolgt getaktet mit einer gegenüber der PWM-Frequenz sehr viel höheren Frequenz, die sich außerhalb des vom menschlichen Gehör wahrnehmbaren Spektrums befindet. Diese Frequenz kann beispielsweise 20 kHz betragen. Die vergrößerten Darstellungen in Figur 2a verdeutlichen außerdem, dass der getaktet durchgeführte Einschaltvorgang und Ausschaltvorgang mit zunehmender bzw. abnehmender Pulslänge des Ein-Signals durchgeführt wird. Auf diese Weise wird der Einschaltvorgang bzw. Ausschaltvorgang allmählich vollzogen. Figur 2b deutet noch sogenannte Ein- und Ausschaltverluste an, die in der Figur 2c ebenfalls ersichtlich sind, welche die aus der Pulsweitenmodulation erhaltene durchschnittliche Ansteuerspannung wiedergibt.

Insgesamt kann bei Ausführung des erfindungsgemäßen Verfahrens die akustisch wahrnehmbare Geräuschentwicklung erheblich reduziert werden, ohne dass die eingangs erwähnten Nachteile anderer Lösungen auftreten.

## Patentansprüche

1. Verfahren zum Ansteuern eines insbesondere akkubetriebenen Elektrohandwerkzeuggeräts mittels Pulsweitenmodulation mit einer Frequenz der Pulsweitenmodulation (F_{PWM}) von 500 - 5000 Hz, **dadurch gekennzeichnet, dass** der Einschaltvorgang und der Ausschaltvorgang bei vorzugsweise jedem einzelnen Puls (14) seinerseits getaktet mit einer gegenüber der Frequenz der Pulsweitenmodulation (F_{PWM}) sehr viel höheren Frequenz (F_{ein/aus}) von 5 kHz - 50 kHz, insbesondere am oberen Ende oder außerhalb des vom menschlichen Gehör wahrnehmbaren Spektrums, durchgeführt wird, und dass der getaktet durchgeführte Einschaltvorgang wenigstens 5 Pulse umfasst, deren Pulslänge (T) von Puls zu Puls zunimmt, und dass der getaktet durchgeführte Ausschaltvorgang wenigstens 5 Pulse umfasst, deren Pulslänge (T) von Puls zu Puls abnimmt.

2. Verfahren nach Anspruch 1, **dadurch gekennzeichnet, dass** der getaktet durchgeführte Einschaltvorgang und Ausschaltvorgang wenigstens 6 Pulse, insbesondere wenigstens 7 Pulse umfasst.

3. Verfahren nach Anspruch 1 oder 2, **dadurch gekennzeichnet, dass** die Frequenz der Pulsweitenmodulation (F_{PWM}) 1000 - 3000 Hz, insbesondere 1500 - 2500 Hz, insbesondere 2000 Hz beträgt.

4. Verfahren nach Anspruch 1, 2 oder 3, **dadurch gekennzeichnet, dass** die Frequenz der Taktung während des Einschaltvorgangs und/oder Ausschaltvorgangs (F_{ein/aus}) 10 kHz - 40 kHz, insbesondere 10 kHz - 30 kHz, insbesondere 20 kHz beträgt.

5. Elektronische Ansteuervorrichtung zum Ansteuern eines Elektrohandwerkzeuggeräts mittels Pulsweitenmodulation, **dadurch gekennzeichnet, dass** die Ansteuervorrichtung (6) zur Ausführung des Verfahrens nach einem oder mehreren der vorstehenden Ansprüche ausgebildet ist.

6. Elektrohandwerkzeuggerät mit einer eine Pulsweitenmodulation durchführenden elektronischen Ansteuervorrichtung nach Anspruch 5.

## Claims

1. Method of controlling an electrical manual tool device, in particular a battery-operated one, by means of pulse width modulation, with a frequency of pulse width modulation (F_{PWM}) from 500 to 5000 Hz, **characterized in that** the switching-on and switching-off events, preferably on each individual pulse (14), are themselves clocked and executed with a very much higher frequency (F_{on/off}) of 5 kHz to 50 kHz compared with the frequency of the pulse width modulation (F_{PWM}), in particular at the top end or beyond the spectrum which can be perceived by human hearing, and that the clocked and executed switching-on event comprises at least 5 pulses, the pulse length (T) of which increases from pulse to pulse, and that the clocked and executed switching-off event comprises at least 5 pulses, the pulse length (T) of which decreases from pulse to pulse.

2. Method according to Claim 1, **characterized in that** the clocked and executed switching-on and switching-off events comprise at least 6 pulses, in particular at least 7 pulses.

3. Method according to Claim 1 or 2, **characterized in that** the frequency of pulse width modulation (F_{PWM}) is 1000 to 3000 Hz, in particular 1500 to 2500 Hz, in particular 2000 Hz.

4. Method according to Claim 1, 2 or 3, **characterized in that** the frequency of clocking during the switching-on event and/or switching-off event (F_{on/off}) is 10 kHz to 40 kHz, in particular 10 kHz to 30 kHz, in particular 20 kHz.

5. Electronic control device for controlling an electrical manual tool device by means of pulse width modulation, **characterized in that** the control device (6) is in a form to execute the method according to one or more of the preceding claims.

6. Electrical manual tool device with an electronic control device according to Claim 5, which carries out the pulse width modulation.

## Revendications

1. Procédé pour commander un outil électrique manuel, en particulier alimenté par accumulateur, par modulation de largeur d'impulsions avec une fréquence de modulation de largeur d'impulsions (F_{PWM}) de 500 à 5000 Hz, **caractérisé en ce que** l'opération de mise en marche et l'opération de mise à l'arrêt sont exécutées de leur côté de préférence à chaque impulsion individuelle (14) dans un mode cadencé avec une fréquence (F_{marche/arrêt}) de 5 kHz à 50 kHz, nettement supérieure à la fréquence de modulation de largeur d'impulsions (F_{PWM}), en particulier à la limite supérieure ou au-delà du spectre perceptible par l'audition humaine, et **en ce que** l'opération de mise en marche exécutée dans un mode cadencé comprend au moins 5 impulsions dont la longueur (T) croît d'impulsion en impulsion, et **en ce que** l'opération de mise à l'arrêt exécutée dans un mode cadencé comprend au moins 5 impulsions dont la longueur (T) décroît d'impulsion en impulsion.

2. Procédé selon la revendication 1, **caractérisé en ce que** l'opération de mise en marche et l'opération de mise à l'arrêt exécutées dans un mode cadencé comprennent au moins 6 impulsions, en particulier au moins 7 impulsions.

3. Procédé selon la revendication 1 ou 2, **caractérisé en ce que** la fréquence de la modulation de largeur d'impulsons (F_{PWM}) est de 1000 à 3000 Hz, en particulier de 1500 à 2500 Hz, plus particulièrement de 2000 Hz.

4. Procédé selon la revendication 1, 2 ou 3, **caractérisé en ce que** la fréquence de la cadence pendant l'opération de mise en marche et/ou pendant l'opération de mise à l'arrêt (F_{marche/arrêt}) est de 10 kHz à 40 kHz, en particulier de 10 kHz à 30 kHz, plus particulièrement de 20 kHz.

5. Dispositif de commande électronique pour commander un outil électrique manuel, par modulation de largeur d'impulsions, **caractérisé en ce que** le dispositif de commande (6) est configuré pour la mise en oeuvre du procédé selon l'une ou plusieurs des revendications précédentes.

6. Outil électrique manuel comportant un dispositif de commande électronique exécutant une modulation de largeur d'impulsions selon la revendication 5.
